# EUROPEAN PATENT SPECIFICATION

(11) **EP 3 591 668 B1**
(45) Date of publication and mention of the grant of the patent: **25.08.2021**
(21) Application number: 19180990.4
(22) Date of filing: 18.06.2019
(51) Int. Cl.: G21C 11/08, G21C 13/08, G21C 13/093

(54) **A NUCLEAR POWER PLANT**
KERNKRAFTWERK
CENTRALE NUCLÉAIRE

(30) Priority: 04.07.2018 GB 201810951
(43) Date of publication of application: 08.01.2020
(73) Proprietor: Rolls-Royce plc, London N1 9FX (GB)
(72) Inventor: Beckett, Stephen, Derby, Derbyshire DE24 8BJ (GB)
(74) Representative: Rolls-Royce plc

(56) References cited:
- CH-A- 443 502
- JP-A- H09 211 169
- US-A- 5 084 234

## Description

The present disclosure relates to a nuclear power plant. A nuclear power plant comprises a nuclear reactor comprising reactor fuel elements, a reactor vessel surrounding the reactor fuel elements, a primary shield surrounding the reactor vessel, a further wall surrounding the primary shield, a containment vessel surrounding the further wall and a building wall surrounding the containment vessel. The reactor vessel typically comprises steel with a thickness of 4 to 8 inches, 10 to 20cm. The primary shield typically comprises a leaded concrete wall 4 feet, 1.22m, thick with internal and external steel linings each with a thickness of 1.5 inches, 3.8mm. The further wall typically comprises reinforced concrete with a thickness of 5 feet, 1.52m. The containment vessel typically comprises steel with a thickness of 1.5 inches, 3.8mm and the building wall typically comprises reinforced concrete with a thickness of 3 feet, 0.91m.

The primary shield, sometimes known as the biological shield, is arranged to prevent the egress of neutron flux from the reactor to the surrounding environment when the reactor is operating and to block gamma rays from the irradiated pressure/reactor vessel when the reactor is shut down. It is designed to prevent radiation doses to humans when the reactor is shut down for inspection and also to prevent the nearby structural materials and other components of the nuclear power plant being irradiated when the reactor is operating.

The primary shield principally comprises concrete but concrete does not provide a high level of neutron shielding and thus the primary shield requires a relatively large amount of concrete and hence the concrete has to be relatively thick. The advantage of concrete is that the concrete is relatively cheap. The primary shield is not optimised to maximise the degree of neutron shielding while minimising the amount of material used for neutron shielding.

US 5 084 234 A discloses a boiling water reactor comprising a reactor vessel surrounded by a concrete wall lined with various shielding layers and layers of elastic material.

Accordingly the present disclosure seeks to provide a nuclear reactor with a primary shield which reduces or overcomes the above mentioned problem.

The present invention consists in a nuclear power plant comprising a nuclear reactor, the nuclear reactor comprising reactor fuel elements, a reactor vessel surrounding the nuclear reactor and a primary shield surrounding the reactor vessel, the reactor fuel elements being arranged between a first height and a second height above the first height, the primary shield at least forming a ring around the reactor vessel, the primary shield comprising a base portion, an intermediate portion and a top portion, the base portion, the intermediate portion and the top portion each extending continuously circumferentially around the reactor vessel, the base portion of the primary shield having an upper height at or below the first height and the base portion comprising concrete, the top portion of the primary shield having a lower height at or above the second height and the top portion comprising concrete, the intermediate portion of the primary shield being arranged vertically between the base portion and the top portion, the intermediate portion comprising at least one support structure for supporting the intermediate portion and the top portion, and the intermediate portion comprising a matrix material containing a polymeric material and tungsten, boron, silver, indium, hafnium or cadmium and the least one support structure extending between the top portion and the bottom portion of the primary shield.

The at least one support structure may comprise an internal concrete member and an external concrete member, a single layer of matrix material containing tungsten or boron being arranged between the internal concrete member and the external concrete member.

The at least one support structure may comprise an internal steel member and an external steel member, a single layer of matrix material containing tungsten or boron being arranged between the internal steel member and the external steel member.

The at least one support member may comprise an internal steel reinforced concrete member and an external steel reinforced concrete member, a single layer of matrix material containing tungsten or boron being arranged between the internal steel reinforced concrete member and the external steel reinforced concrete member.

The at least one support member may comprise an internal concrete member, an intermediate concrete member and an external concrete member, a first layer of matrix material containing tungsten or boron being arranged between the internal concrete member and the intermediate concrete member and a second layer of matrix material containing tungsten or boron being arranged between the intermediate concrete member and the external concrete member.

The at least one support member may comprise an internal steel member, an intermediate steel member and an external steel member, a first layer of matrix material containing tungsten or boron being arranged between the internal steel member and the intermediate steel member and a second layer of matrix material containing tungsten or boron being arranged between the intermediate steel member and the external steel member.

The at least one support member may comprise an internal steel reinforced concrete member, an intermediate steel reinforced concrete member and an external steel reinforced concrete member, a first layer of matrix material containing tungsten or boron being arranged between the internal steel reinforced concrete member and the intermediate steel reinforced concrete member and a second layer of matrix material containing tungsten or boron being arranged between the intermediate steel reinforced concrete member and the external steel reinforced concrete member.

The matrix material comprises a polymeric material. The polymeric material may comprise polypropylene or polythene. The tungsten or boron may be distributed throughout the matrix material, e.g. the polymeric material, as a powder or as particles. The matrix material may contain both tungsten and boron. The matrix material may contain tungsten carbide, boron carbide, boron nitride or boron carbo-nitride. The matrix material may contain tungsten and/or boron as other suitable compounds.

The primary shield may comprise an internal steel lining and an external steel lining, the base portion, the intermediate portion and the top portion being sandwiched between the internal steel lining and the external steel lining.

The intermediate portion may have a radially inner surface and a radially outer surface, the intermediate portion has the same vertical height at the radially outer surface as the radially inner surface.

The intermediate portion may have a radially inner surface and a radially outer surface, the intermediate portion has greater vertical height at the radially outer surface than the radially inner surface.

The intermediate portion may have a radially inner surface and a radially outer surface, the intermediate portion has greater vertical height at the radially inner surface than the radially outer surface.

A further wall may surround the primary shield, a containment vessel surrounding the further wall and a building wall surrounding the containment vessel.

The nuclear reactor may be a pressurised water reactor or a boiling water reactor.

The nuclear reactor may be a small modular reactor.

The small modular nuclear reactor may be arranged to produce up to 500MWe.

The small modular nuclear reactor may be arranged to produce 220 to 440MWe.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
Figure 1 is a sectional side view of a nuclear power plant according to the present disclosure.
Figure 2 is an enlarged sectional side view of a portion of the nuclear power plant shown in figure 1.
Figure 3 is an alternative enlarged sectional side view of a portion of the nuclear power plant shown in figure 1.
Figure 4 is another alternative enlarged sectional side view of a portion of the nuclear power plant shown in figure 1.
Figure 5 is a further alternative enlarged sectional side view of a portion of the nuclear power plant shown in figure 1.

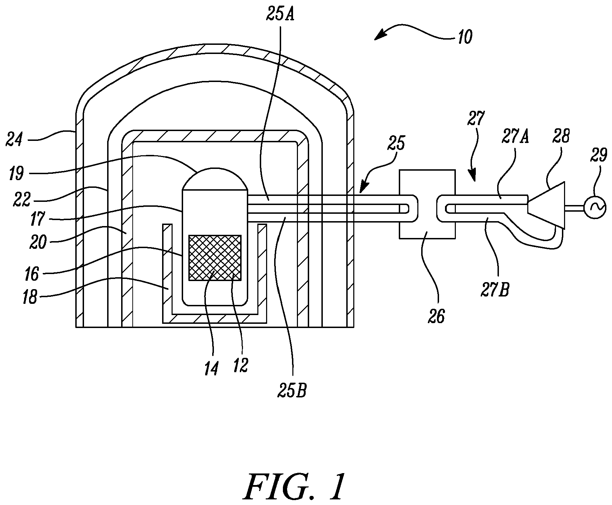

Figure 1 shows a nuclear power plant 10 comprising a nuclear reactor 12, a reactor vessel 16 surrounding the nuclear reactor 12 and a primary shield 18 surrounding the reactor vessel 16. The nuclear reactor 12 comprises reactor fuel elements 14. A further wall 20 surrounds the primary shield 18, a containment vessel 22 surrounds the further wall 20 and a building wall 24 surrounds the containment vessel 22. The primary shield 18 at least forms a ring around the reactor vessel 16. The reactor vessel 16 comprises a main portion 17 and a lid 19. The nuclear power plant 10 also comprises a primary circuit 25, a heat exchanger 26, a secondary circuit 27, a turbine 28 and an electrical generator 29. The primary fluid in the primary circuit 25 is heated by the nuclear reactor 12. The primary fluid flows through a pipe 25A from the nuclear reactor 12 to the heat exchanger 26 where it heats the secondary fluid in the secondary circuit 27. The primary fluid in the primary circuit 25 flows through pipe 25B from the heat exchanger 26 back to the nuclear reactor 12. The heated secondary fluid in the secondary circuit 27 flows through the pipe 27A to and drives the turbine 28 which in turn drives the electrical generator 29 to generate electricity. For example the secondary fluid is water, the heated secondary fluid is steam and the turbine 28 is a steam turbine 28. Alternatively, the turbine 28 may provide drive for other purposes. The nuclear reactor 12 may be a boiling water reactor (BWR) or a pressurised water reactor (PWR). There may be a pressuriser if the nuclear power plant 10 comprises a pressurised water reactor. The nuclear reactor 12 may be a small modular reactor (SMR) for example for producing up to 500MWe, e.g. 220 to 440MWe.

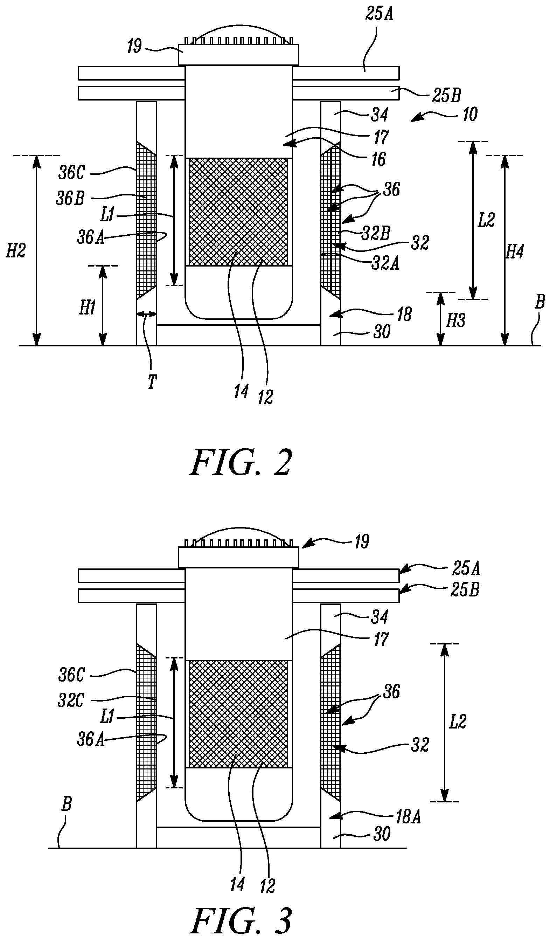

Figure 2 shows a first arrangement of the primary shield 18 in more detail. The reactor fuel elements 14 are arranged between a first height H1 and a second height H2 above the first height H1. The first and second heights H1 and H2 are measured relative to a base level, or base height, B. The primary shield 18 comprises a base portion 30, an intermediate portion 32 and a top portion 34. The base portion 30, the intermediate portion 32 and the top portion 34 each extend continuously circumferentially around the reactor vessel 16. The base portion 30 of the primary shield 18 has an upper height H3 arranged below the first height H1. The base portion 30 comprises concrete. The top portion 34 of the primary shield 18 has a lower height H4 arranged above the second height H2. The heights H3 and H4 are also measured relative to the base level, or base height, B. The top portion 34 comprises concrete. The intermediate portion 32 of the primary shield 18 is arranged vertically between the base portion 30 and the top portion 34. The intermediate portion 32 comprises a matrix material containing tungsten or boron and at least one support structure 36. The at least one support structure 36 extends between the top portion 34 and the bottom portion 30 of the primary shield 18. The at least one support structure 36 supports the intermediate portion 32 and the top portion 34 of the primary shield 18. The primary shield 18 has a thickness T.

In this example the at least one support structure 36 comprises a radially inner support structure 36A, a radially intermediate support structure 36B and a radially outer support structure 36C. A first layer 32A of matrix material containing tungsten or boron is arranged between the radially inner support structure 36A and the radially intermediate support structure 36B and a second layer 32B of matrix material containing tungsten or boron is arranged between the radially intermediate support structure 36B and the radially outer support structure 36C. The radially inner support structure 36A, the radially intermediate support structure 36B and the radially outer support structure 36C comprise concrete and/or steel. The radially inner support structure 36A, the radially intermediate support structure 36B and the radially outer support structure 36C may each comprise concrete, steel, steel reinforced concrete or concrete with a steel lining. The matrix material comprises a polymeric material. The polymeric material may comprise polypropylene or polythene. The polymeric material may also comprise any polymer that may be injection moulded and their thermal properties and their neutron absorbing properties. The tungsten or the boron may be distributed throughout the matrix material, e.g. the polymeric material, as a powder or as particles. The matrix material may contain both tungsten and boron. The matrix material may contain the tungsten and/or boron as tungsten carbide, boron carbide, boron nitride, boron carbo-nitride or as other suitable compounds provided they do not negatively affect the material properties of the intermediate portion 32 of the primary shield 18 in such a way as to make it impossible to manufacture the first layer 32A and/or the second layer 32B.

It is to be noted that the intermediate portion 32 has a radially inner surface and a radially outer surface, the intermediate portion 32 has a vertical height L1 at the radially inner surface of intermediate portion 32 and has a vertical height L2 at the radially outer surface and the vertical height L2 at the radially outer surface is greater than the vertical height L1 at the radially inner surface. In particular it is noticed that the second layer 32B of matrix material containing tungsten or boron has a greater vertical height than the first layer 32A of matrix material containing tungsten or boron. Thus, the intermediate portion 32 is contoured. It is also noted that vertical height L1 = height H4 - height H3.

In a first example the radially inner support structure 36A comprises an internal concrete member, the radially intermediate support structure 36B comprises an intermediate concrete member, the radially outer support structure 36C comprises an external concrete member, the first layer 32A of polymer matrix containing tungsten or boron is sandwiched between the internal concrete member and the intermediate concrete member and the second layer 32B of polymer matrix containing tungsten or boron is sandwiched between the intermediate concrete member and the external concrete member. In addition an inner steel lining may be provided on the inner surface of the primary shield 18 and an outer steel lining may be provided on the outer surface of the primary shield 18.

In a second example the radially inner support structure 36A comprises an internal steel reinforce concrete member, the radially intermediate support structure 36B comprises an intermediate steel reinforced concrete member, the radially outer support structure 36C comprises an external steel reinforced concrete member, the first layer 32A of polymer matrix containing tungsten or boron is sandwiched between the internal steel reinforced concrete member and the intermediate steel reinforced concrete member and the second layer 32B of polymer matrix containing tungsten or boron is sandwiched between the intermediate steel reinforced concrete member and the external steel reinforced concrete member. In addition an inner steel lining may be provided on the inner surface of the primary shield 18 and an outer steel lining may be provided on the outer surface of the primary shield 18.

Thus the primary shield 18 comprises a matrix material containing tungsten or boron to shield around the region of the reactor vessel 16 where the neutron flux is highest. The structural requirements for the primary shield 18 in this region are provided by the concrete and/or steel support structures 36A, 36B and 36C while the first and second layers 32A and 32B of matrix material containing tungsten or boron is used to make up the majority of the thickness of the primary shield 18 in this region and prevent the egress of neutron flux from the nuclear reactor 12 to the surrounding environment when the nuclear reactor 12 is operating and to block gamma rays from the irradiated pressure/reactor vessel 16 when the nuclear reactor 12 is shut down. The first and second layers 32A and 32B of matrix material containing tungsten or boron also prevent radiation doses to humans when the nuclear reactor 12 is shut down for inspection and also to prevent the nearby structural materials and other components of the nuclear power plant 10 being irradiated when the nuclear reactor 12 is operating.

The primary shield 18 takes advantage of the superior shielding properties of tungsten in the matrix material compared with concrete to reduce the thickness of the primary shield 18 by up to 50%. The primary shield 18 for example has a thickness T of 2 to 3 feet. This provides a significant reduction in the space taken by the primary shield 18, allowing the components, e.g. heat exchanger 26, pressuriser, surrounding the nuclear reactor 12 to be placed closer to the nuclear reactor 12. This reduces the length of pipework, decreasing the probability of a pipe break and reduces the quantity of radioactive waste to be dealt with at the end of the working life of the nuclear reactor 12 and nuclear power plant 10. The primary shield 18 uses the advantage of the superior structural properties of the concrete and/or steel support structures 32A, 32B and 32C to protect the first and second layers 32A and 32B of matrix material containing the tungsten or boron in the event of an accident. It also reduces the quantity of tungsten or boron required, thereby reducing the cost significantly while retaining the shielding benefits of the matrix material containing the tungsten or boron. The contoured intermediate portions 32 of the primary shield 18 matches the maximum neutron flux emitted from the nuclear reactor 12 and is designed so the minimum quantity of tungsten or boron based matrix material is used, e.g. in the first and second layers 32A and 32B.

Figure 3 shows a second arrangement of the primary shield 18A in more detail. The second arrangement of primary shield 18A is substantially the same as the primary shield 18 shown in figure 2 and like parts are denoted by like numerals. The primary shield 18A differs in that the at least one support structure 36 comprises a radially inner support structure 36A and a radially outer support structure 36C only. A single layer 32C of matrix material containing tungsten or boron is arranged between the radially inner support structure 36A and the radially outer support structure 36C. The radially inner support structure 36A and the radially outer support structure 36C comprise concrete and/or steel. The radially inner support structure 36A and the radially outer support structure 36C may each comprise concrete, steel, steel reinforced concrete or concrete with a steel lining. The matrix material comprises a polymeric material. The polymeric material may comprise polypropylene or polythene. The polymeric material may also comprise any polymer that may be injection moulded and their thermal properties and their neutron absorbing properties. The tungsten or boron may be distributed throughout the matrix material, e.g. the polymeric material, as a powder or as particles. The matrix material may contain both tungsten and boron. The matrix material may contain the tungsten and/or boron as tungsten carbide, boron carbide, boron nitride, boron carbo-nitride or as other suitable compounds provided they do not negatively affect the material properties of the intermediate portion 32 of the primary shield 18 in such a way as to make it impossible to manufacture the single layer 32C.

Again, it is to be noted that the intermediate portion 32 has a radially inner surface and a radially outer surface, the intermediate portion 32 has a vertical height L1 at the radially inner surface of intermediate portion 32 and has a vertical height L2 at the radially outer surface and the vertical height L2 at the radially outer surface is greater than the vertical height L1 at the radially inner surface. In particular it is noticed that the single layer 32C of matrix material containing tungsten or boron has a greater vertical height nearer to the radially outer surface than the radially inner surface. Thus, the intermediate portion 32 is contoured. It is also noted that vertical height L1 = height H4 - height H3.

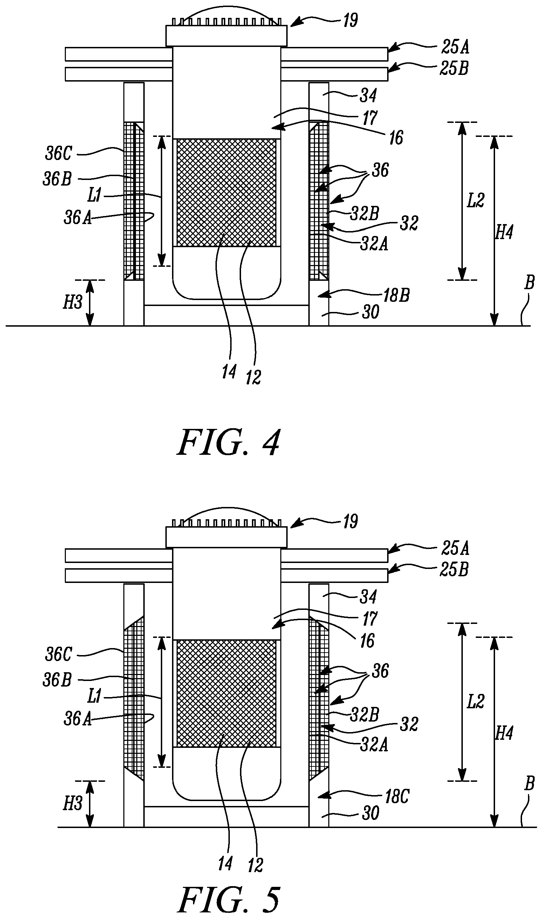

Figure 4 shows a third arrangement of the primary shield 18B in more detail. The third arrangement of primary shield 18B is substantially the same as the primary shield 18 shown in figure 2 and like parts are denoted by like numerals. The primary shield 18B differs in that that the intermediate portion 32 has a radially inner surface and a radially outer surface, the intermediate portion 32 has a vertical height L1 at the radially inner surface of intermediate portion 32 and has a vertical height L2 at the radially outer surface and the vertical height L2 at the radially outer surface is the same as the vertical height L1 at the radially inner surface. It is also noted that vertical height L1 = vertical height L2 = height H4 - height H3. In particular it is noticed that the first layer 32A of matrix material containing tungsten or boron has the same vertical height as the second layer 32B of matrix material containing tungsten or boron. Alternatively, in an arrangement without a radially intermediate support structure, a single layer of matrix material containing tungsten or boron may be provided between the radially inner support structure and the radially outer support structure.

Figure 5 shows a fourth arrangement of the primary shield 18C in more detail. The fourth arrangement of primary shield 18C is substantially the same as the primary shield 18 shown in figure 2 and like parts are denoted by like numerals. The primary shield 18C differs in that that the intermediate portion 32 has a radially inner surface and a radially outer surface, the intermediate portion 32 has a vertical height L1 at the radially inner surface of intermediate portion 32 and has a vertical height L2 at the radially outer surface and the vertical height L1 at the radially inner surface is the greater than the vertical height L2 at the radially outer surface. It is also noted that vertical height L2 = height H4 - height H3.

In particular it is noticed that the first layer 32A of matrix material containing tungsten or boron has a greater vertical height than the second layer 32B of matrix material containing tungsten or boron. Thus, the intermediate portion 32 is contoured. Alternatively, in an arrangement without a radially intermediate support structure, a single layer of matrix material containing tungsten or boron may be provided between the radially inner support structure and the radially outer support structure.

A first layer of matrix material containing tungsten or boron may be arranged between an internal steel member and an intermediate steel member and a second layer of matrix material containing tungsten or boron may be arranged between the intermediate steel member and the external steel member. A first layer of matrix material containing tungsten or boron may be arranged between an internal concrete member and an intermediate concrete member and a second layer of matrix material containing tungsten or boron may be arranged between the intermediate concrete member and the external concrete member. A first layer of matrix material containing tungsten or boron may be arranged between an internal steel reinforced concrete member and an intermediate steel reinforced concrete member and a second layer of matrix material containing tungsten or boron may be arranged between the intermediate steel reinforced concrete member and the external steel reinforced concrete member.

A single layer of matrix material containing tungsten or boron may be arranged between an internal steel member and an external steel member. A single layer of matrix material containing tungsten or boron may be arranged between an internal concrete member and an external concrete member. A single layer of matrix material containing tungsten or boron may be arranged between an internal steel reinforced concrete member and an external steel reinforced concrete member.

The primary shield may comprise an internal steel lining and an external steel lining, the base portion, the intermediate portion and the top portion being sandwiched between the internal steel lining and the external steel lining.

Although the present disclosure has referred to the use of steel for the support structure it may be equally possible to use any other suitable metal, e.g. nickel, aluminium, lead, titanium etc.

The steel, or metal, support structure may comprise a framework in suitable circumstances, e.g. the intermediate support structure.

Although the present disclosure has referred to the matrix material containing tungsten and/or boron being sandwiched between the internal and external support structures, it may be possible for a layer of matrix material containing tungsten and/or boron to be secured to the internal surface of the primary shield in the intermediate region or a layer of matrix material containing tungsten and/or boron to be secured to the external surface of the primary shield in the intermediate region or a layer of matrix material containing tungsten and/or boron to be secured to the internal surface of the primary shield in the intermediate region and a layer of matrix material containing tungsten and/or boron to be secured to the external surface of the primary shield in the intermediate region.

The matrix material containing tungsten or boron is completely encased within the support structure of the intermediate portion of the primary shield and is not visible, e.g. directly accessible, and hence is protected by the support structure of the intermediate portion of the primary shield.

It may be possible to use one or more other suitable neutron absorbing materials in the matrix material for example silver, indium, hafnium an cadmium taking into account the cost of these materials and whether they affect the manufacturability of the polymeric material.

It may be possible to use other matrix materials such as a metal. Suitable metal matrix materials are for example steel, stainless steel, mild steel, titanium or aluminium.

Although the present disclosure has referred to the heat exchanger 26, the turbine 28 and the electrical generator 29 being arranged outside the building wall 24 it may be possible for one or more of them to be arranged within the building wall 24 and they may be arranged within and to be surrounded by the further wall 20.

It will be understood that the invention is not limited to the embodiments above-described and various modifications and improvements can be made without departing from the scope of the invention as defined by the appended claims.

## Claims

1. A nuclear power plant (10) comprising a nuclear reactor (12), the nuclear reactor (12) comprising reactor fuel elements (14), a reactor vessel (16) surrounding the nuclear reactor (12) and a primary shield (18) surrounding the reactor vessel (16), the reactor fuel elements (14) being arranged between a first height (H1) and a second height (H2) above the first height (H1),
the primary shield (18) at least forming a ring around the reactor vessel (16), the primary shield (18) comprising a base portion (30), an intermediate portion (32) and a top portion (34), the base portion (30), the intermediate portion (32) and the top portion (34) each extending continuously circumferentially around the reactor vessel (16), the base portion (30) of the primary shield (18) having an upper height (H3) at or below the first height (H1) and the base portion (30) comprising concrete, the top portion (34) of the primary shield (18) having a lower height (H4) at or above the second height (H2) and the top portion (34) comprising concrete, the intermediate portion (32) of the primary shield (18) being arranged vertically between the base portion (30) and the top portion (34), the intermediate portion (32) comprising at least one support structure (36, 36A, 36B, 36C) for supporting the intermediate portion (32) and the top portion (34), the at least one support structure (36, 36A, 36B, 36C) extending between the top portion (34) and the bottom portion (30) of the primary shield (18), and **characterized in that** the intermediate portion comprises a matrix material,
the matrix material comprising a polymeric material and containing tungsten, boron, silver, indium, hafnium or cadmium (32A, 32B).

2. A nuclear power plant as claimed in claim 1 wherein the at least one support structure (36) comprises an internal concrete member (36A) and an external concrete member (36C), a single layer of matrix material (32C) containing tungsten or boron being arranged between the internal concrete member (36A) and the external concrete member (36C).

3. A nuclear power plant as claimed in claim 1 wherein the at least one support structure (36) comprises an internal steel member (36A) and an external steel member (36C), a single layer of matrix material (32C) containing tungsten or boron being arranged between the internal steel member (36A) and the external steel member (36C).

4. A nuclear power plant as claimed in claim 1 wherein the at least one support member (36) comprises an internal steel reinforced concrete member (36A) and an external steel reinforced concrete member (36C), a single layer of matrix material (32C) containing tungsten or boron being arranged between the internal steel reinforced concrete member (36A) and the external steel reinforced concrete member (36C).

5. A nuclear power plant as claimed in claim 1 wherein the at least one support member (36) comprises an internal concrete member (36A), an intermediate concrete member (36B) and an external concrete member (36C), a first layer of matrix material (32A) containing tungsten or boron being arranged between the internal concrete member (36A) and the intermediate concrete member (36B) and a second layer of matrix material (32B) containing tungsten or boron being arranged between the intermediate concrete member (36B) and the external concrete member (36C).

6. A nuclear power plant as claimed in claim 1 wherein the at least one support member (36) comprises an internal steel member (36A), an intermediate steel member (36B) and an external steel member (36C), a first layer of matrix material (32A) containing tungsten or boron being arranged between the internal steel member (36A) and the intermediate steel member (36B) and a second layer of matrix material (32B) containing tungsten or boron being arranged between the intermediate steel member (36B) and the external steel member (36C).

7. A nuclear power plant as claimed in claim 1 wherein the at least one support member (36) comprises an internal steel reinforced concrete member (36A), an intermediate steel reinforced concrete member (36B) and an external steel reinforced concrete member (36C), a first layer of matrix material (32A) containing tungsten or boron being arranged between the internal steel reinforced concrete member (36A) and the intermediate steel reinforced concrete member (36B) and a second layer of matrix material (32B) containing tungsten or boron being arranged between the intermediate steel reinforced concrete member (36B) and the external steel reinforced concrete member (36C).

8. A nuclear power plant as claimed in any of claims 1 to 7 wherein the polymeric material comprises polypropylene or polythene.

9. A nuclear power plant as claimed in any of claims 1 to 8 wherein the tungsten or boron is distributed throughout the matrix material (32A, 32B, 32C) as a powder or as particles.

10. A nuclear power plant as claimed in any of claims 1 to 9 wherein the primary shield (18) comprises an internal steel lining and an external steel lining, the base portion (30), the intermediate portion (32) and the top portion (34) being sandwiched between the internal steel lining and the external steel lining.

11. A nuclear power plant as claimed in any of claims 1 to 10 wherein the intermediate portion (32) has a radially inner surface and a radially outer surface, the intermediate portion (32) has the same vertical height at the radially outer surface (L2) as the radially inner surface (L1).

12. A nuclear power plant as claimed in any of claims 1 to 10 wherein the intermediate portion (32) has a radially inner surface and a radially outer surface, the intermediate portion (32) has a greater vertical height at the radially outer surface (L2) than the radially inner surface (L1).

13. A nuclear power plant as claimed in any of claims 1 to 10 wherein the intermediate portion (32) has a radially inner surface and a radially outer surface, the intermediate portion (32) has a greater vertical height at the radially inner surface (L1) than the radially outer surface (L2).

14. A nuclear power plant as claimed in any of claims 1 to 13 wherein a further wall (20) surrounds the primary shield (18), a containment vessel (22) surrounds the further wall (20) and a building wall (24) surrounds the containment vessel (22).

15. A nuclear power plant as claimed in any of claims 1 to 14 wherein the nuclear reactor (12) is a pressurised water reactor or a boiling water reactor.

16. A nuclear power plant as claimed in any of claims 1 to 15 wherein the nuclear reactor (12) is a small modular reactor arranged to produce up to 500MWe.

## Patentansprüche

1. Kernkraftwerk (10), umfassend einen Kernreaktor (12), wobei der Kernreaktor (12) Reaktorkraftstoffelemente (14), ein Reaktorgefäß (16), das den Kernreaktor (12) umgibt, und eine Primärabschirmung (18) umfasst, die das Reaktorgefäß (16) umgibt, wobei die Reaktorkraftstoffelemente (14) zwischen einer ersten Höhe (H1) und einer zweiten Höhe (H2) über der ersten Höhe (H1) angeordnet sind,
wobei die Primärabschirmung (18) zumindest einen Ring um das Reaktorgefäß (16) bildet, wobei die Primärabschirmung (18) einen Basisabschnitt (30), einen mittleren Abschnitt (32) und einen oberen Abschnitt (34) umfasst, wobei sich der Basisabschnitt (30), der mittlere Abschnitt (32) und der obere Abschnitt (34) jeweils durchgehend umlaufend um das Reaktorgefäß (16) erstrecken, wobei der Basisabschnitt (30) der Primärabschirmung (18) eine obere Höhe (H3) an oder unter der ersten Höhe (H1) aufweist und der Basisabschnitt (30) Beton umfasst, wobei der obere Abschnitt (34) der Primärabschirmung (18) eine untere Höhe (H4) an oder über der zweiten Höhe (H2) aufweist und der obere Abschnitt (34) Beton umfasst, wobei der mittlere Abschnitt (32) der Primärabschirmung (18) vertikal zwischen dem Basisabschnitt (30) und dem oberen Abschnitt (34) angeordnet ist, wobei der mittlere Abschnitt (32) zumindest eine Stützstruktur (36, 36A, 36B, 36C) zum Stützen des mittleren Abschnittes (32) und des oberen Abschnittes (34) umfasst, wobei sich die zumindest eine Stützstruktur (36, 36A, 36B, 36C) zwischen dem oberen Abschnitt (34) und dem unteren Abschnitt (30) der Primärabschirmung (18) erstreckt, und **dadurch gekennzeichnet, dass** der mittlere Abschnitt ein Matrixmaterial umfasst,
wobei das Matrixmaterial ein Polymermaterial umfasst und Wolfram, Bor, Silber, Indium, Hafnium oder Cadmium (32A, 32B) enthält.

2. Kernkraftwerk nach Anspruch 1, wobei die zumindest eine Stützstruktur (36) ein inneres Betonteil (36A) und ein äußeres Betonteil (36C) umfasst, wobei eine Einzelschicht aus Matrixmaterial (32C), die Wolfram oder Bor enthält, zwischen dem inneren Betonteil (36A) und dem äußeren Betonteil (36C) angeordnet ist.

3. Kernkraftwerk nach Anspruch 1, wobei die zumindest eine Stützstruktur (36) ein inneres Stahlteil (36A) und ein äußeres Stahlteil (36C) umfasst, wobei eine Einzelschicht aus Matrixmaterial (32C), die Wolfram oder Bor enthält, zwischen dem inneren Stahlteil (36A) und dem äußeren Stahlteil (36C) angeordnet ist.

4. Kernkraftwerk nach Anspruch 1, wobei das zumindest eine Stützteil (36) ein inneres stahlverstärktes Betonteil (36A) und ein äußeres stahlverstärktes Betonteil (36C) umfasst, wobei eine Einzelschicht aus Matrixmaterial (32C), die Wolfram oder Bor enthält, zwischen dem inneren stahlverstärkten Betonteil (36A) und dem äußeren stahlverstärkten Betonteil (36C) angeordnet ist.

5. Kernkraftwerk nach Anspruch 1, wobei das zumindest eine Stützteil (36) ein inneres Betonteil (36A), ein mittleres Betonteil (36B) und ein äußeres Betonteil (36C) umfasst, wobei eine erste Schicht aus Matrixmaterial (32A), die Wolfram oder Bor enthält, zwischen dem inneren Betonteil (36A) und dem mittleren Betonteil (36B) angeordnet ist und eine zweite Schicht aus Matrixmaterial (32B), die Wolfram oder Bor enthält, zwischen dem mittleren Betonteil (36B) und dem äußeren Betonteil (36C) angeordnet ist.

6. Kernkraftwerk nach Anspruch 1, wobei das zumindest eine Stützteil (36) ein inneres Stahlteil (36A), ein mittleres Stahlteil (36B) und ein äußeres Stahlteil (36C) umfasst, wobei eine erste Schicht aus Matrixmaterial (32A), die Wolfram oder Bor enthält, zwischen dem inneren Stahlteil (36A) und dem mittleren Stahlteil (36B) angeordnet ist und eine zweite Schicht aus Matrixmaterial (32B), die Wolfram oder Bor enthält, zwischen dem mittleren Stahlteil (36B) und dem äußeren Stahlteil (36C) angeordnet ist.

7. Kernkraftwerk nach Anspruch 1, wobei das zumindest eine Stützteil (36) ein inneres stahlverstärktes Betonteil (36A), ein mittleres stahlverstärktes Betonteil (36B) und ein äußeres stahlverstärktes Betonteil (36C) umfasst, wobei eine erste Schicht aus Matrixmaterial (32A), die Wolfram oder Bor enthält, zwischen dem inneren stahlverstärkten Betonteil (36A) und dem mittleren stahlverstärkten Betonteil (36B) angeordnet ist und die zweite Schicht aus Matrixmaterial (32B), die Wolfram oder Bor enthält, zwischen dem mittleren stahlverstärkten Betonteil (36B) und dem äußeren stahlverstärkten Betonteil (36C) angeordnet ist.

8. Kernkraftwerk nach einem der Ansprüche 1 bis 7, wobei das Polymermaterial Polypropylen oder Polythen umfasst.

9. Kernkraftwerk nach einem der Ansprüche 1 bis 8, wobei der Wolfram oder das Bor durch das Matrixmaterial (32A, 32B, 32C) als Pulver oder als Partikel verteilt ist.

10. Kernkraftwerk nach einem der Ansprüche 1 bis 9, wobei die Primärabschirmung (18) eine innere Stahlauskleidung und eine äußere Stahlauskleidung umfasst, wobei der Basisabschnitt (30), der mittlere Abschnitt (32) und der obere Abschnitt (34) zwischen der inneren Stahlauskleidung und der äußeren Stahlauskleidung eingefügt sind.

11. Kernkraftwerk nach einem der Ansprüche 1 bis 10, wobei der mittlere Abschnitt (32) eine radial innere Fläche und eine radial äußere Fläche aufweist, wobei der mittlere Abschnitt (32) die gleiche vertikale Höhe an der radial äußeren Fläche (L2) wie der radial inneren Fläche (L1) aufweist.

12. Kernkraftwerk nach einem der Ansprüche 1 bis 10, wobei der mittlere Abschnitt (32) eine radial innere Fläche und eine radial äußere Fläche aufweist, wobei der mittlere Abschnitt (32) eine größere vertikale Höhe an der radial äußeren Fläche (L2) als der radial inneren Fläche (L1) aufweist.

13. Kernkraftwerk nach einem der Ansprüche 1 bis 10, wobei der mittlere Abschnitt (32) eine radial innere Fläche und eine radial äußere Fläche aufweist, wobei der mittlere Abschnitt (32) eine größere vertikale Höhe an der radial inneren Fläche (L1) als der radial äußeren Fläche (L2) aufweist.

14. Kernkraftwerk nach einem der Ansprüche 1 bis 13, wobei eine weitere Wand (20) die Primärabschirmung (18) umgibt, ein Einschlussgefäß (22) die weitere Wand (20) umgibt und eine Gebäudewand (24) das Einschlussgefäß (22) umgibt.

15. Kernkraftwerk nach einem der Ansprüche 1 bis 14, wobei der Kernreaktor (12) ein Druckwasserreaktor oder ein Siedewasserreaktor ist.

16. Kernkraftwerk nach einem der Ansprüche 1 bis 15, wobei der Kernreaktor (12) ein kleiner modularer Reaktor ist, der angeordnet ist, um bis zu 500 MWe zu erzeugen.

## Revendications

1. Centrale nucléaire (10) comprenant un réacteur nucléaire (12), le réacteur nucléaire (12) comprenant des éléments combustibles de réacteur (14), une cuve de réacteur (16) entourant le réacteur nucléaire (12) et un écran primaire (18) entourant la cuve de réacteur (16), les éléments combustibles de réacteur (14) étant disposés entre une première hauteur (H1) et une deuxième hauteur (H2) au-dessus de la première hauteur (H1),
l'écran primaire (18) formant au moins un anneau autour de la cuve de réacteur (16), l'écran primaire (18) comprenant une partie de base (30), une partie intermédiaire (32) et une partie supérieure (34), la partie de base (30), la partie intermédiaire (32) et le partie supérieure (34) s'étendant chacune de manière continue circonférentiellement autour de la cuve de réacteur (16), la partie de base (30) de l'écran primaire (18) ayant une hauteur supérieure (H3) au niveau de ou en dessous de la première hauteur (H1) et la partie de base (30) comprenant du béton, la partie supérieure (34) de l'écran primaire (18) ayant une hauteur inférieure (H4) au niveau de ou au-dessus de la deuxième hauteur (H2) et la partie supérieure (34) comprenant du béton, la partie intermédiaire (32) de l'écran primaire (18) étant disposée verticalement entre la partie de base (30) et la partie supérieure (34), la partie intermédiaire (32) comprenant au moins une structure de support (36, 36A, 36B, 36C) pour supporter la partie intermédiaire (32) et la partie supérieure (34), l'au moins une structure de support (36, 36A, 36B, 36C) s'étendant entre la partie supérieure (34) et le partie inférieure (30) de l'écran primaire (18), et **caractérisée en ce que** la partie intermédiaire comprend un matériau de matrice, le matériau de matrice comprenant un matériau polymère et contenant du tungstène, du bore, de l'argent, de l'indium, de l'hafnium ou du cadmium (32A, 32B).

2. Centrale nucléaire selon la revendication 1, dans laquelle l'au moins une structure de support (36) comprend un élément interne en béton (36A) et un élément externe en béton (36C), une seule couche de matériau de matrice (32C) contenant du tungstène ou du bore étant disposée entre l'élément interne en béton (36A) et l'élément externe en béton (36C).

3. Centrale nucléaire selon la revendication 1, dans laquelle l'au moins une structure de support (36) comprend un élément interne en acier (36A) et un élément externe en acier (36C), une seule couche de matériau de matrice (32C) contenant du tungstène ou du bore étant disposée entre l'élément interne en acier (36A) et l'élément externe en acier (36C).

4. Centrale nucléaire selon la revendication 1, dans laquelle l'au moins un élément de support (36) comprend un élément interne en béton armé d'acier (36A) et un élément externe en béton armé d'acier (36C), une seule couche de matériau de matrice (32C) contenant du tungstène ou du bore étant disposée entre l'élément interne en béton armé d'acier (36A) et l'élément externe en béton armé d'acier (36C).

5. Centrale nucléaire selon la revendication 1, dans laquelle l'au moins un élément de support (36) comprend un élément interne en béton (36A), un élément intermédiaire en béton (36B) et un élément externe en béton (36C), une première couche de matériau de matrice (32A) contenant du tungstène ou du bore étant disposée entre l'élément interne en béton (36A) et l'élément intermédiaire en béton (36B) et une deuxième couche de matériau de matrice (32B) contenant du tungstène ou du bore étant disposée entre l'élément intermédiaire en béton (36B) et l'élément externe en béton (36C).

6. Centrale nucléaire selon la revendication 1, dans laquelle l'au moins un élément de support (36) comprend un élément interne en acier (36A), un élément intermédiaire en acier (36B) et un élément externe en acier (36C), une première couche de matériau de matrice (32A) contenant du tungstène ou du bore étant disposée entre l'élément interne en acier (36A) et l'élément intermédiaire en acier (36B) et une deuxième couche de matériau de matrice (32B) contenant du tungstène ou du bore étant disposée entre l'élément intermédiaire en acier (36B) et l'élément externe en acier (36C).

7. Centrale nucléaire selon la revendication 1, dans laquelle l'au moins un élément de support (36) comprend un élément interne en béton armé d'acier (36A), un élément intermédiaire en béton armé d'acier (36B) et un élément externe en béton armé d'acier (36C), une première couche de matériau de matrice (32A) contenant du tungstène ou du bore étant disposée entre l'élément interne en béton armé d'acier (36A) et l'élément intermédiaire en béton armé d'acier (36B) et une deuxième couche de matériau de matrice (32B) contenant du tungstène ou du bore étant disposée entre l'élément intermédiaire en béton armé d'acier (36B) et l'élément externe en béton armé d'acier (36C).

8. Centrale nucléaire selon l'une quelconque des revendications 1 à 7, dans laquelle le matériau polymère comprend du polypropylène ou du polyéthylène.

9. Centrale nucléaire selon l'une quelconque des revendications 1 à 8, dans laquelle le tungstène ou le bore est réparti dans tout le matériau de matrice (32A, 32B, 32C) sous forme de poudre ou de particules.

10. Centrale nucléaire selon l'une quelconque des revendications 1 à 9, dans laquelle l'écran primaire (18) comprend un revêtement interne en acier et un revêtement externe en acier, la partie de base (30), la partie intermédiaire (32) et la partie supérieure (34) étant prises en sandwich entre le revêtement interne en acier et le revêtement externe en acier.

11. Centrale nucléaire selon l'une quelconque des revendications 1 à 10, dans laquelle la partie intermédiaire (32) a une surface radialement interne et une surface radialement externe, la partie intermédiaire (32) a la même hauteur verticale au niveau de la surface radialement externe (L2) que la surface radialement interne (L1).

12. Centrale nucléaire selon l'une quelconque des revendications 1 à 10, dans laquelle la partie intermédiaire (32) a une surface radialement interne et une surface radialement externe, la partie intermédiaire (32) a une plus grande hauteur verticale au niveau de la surface radialement externe (L2) que la surface radialement interne (L1).

13. Centrale nucléaire selon l'une quelconque des revendications 1 à 10, dans laquelle la partie intermédiaire (32) a une surface radialement interne et une surface radialement externe, la partie intermédiaire (32) a une plus grande hauteur verticale au niveau de la surface radialement interne (L1) que la surface radialement externe (L2).

14. Centrale nucléaire selon l'une quelconque des revendications 1 à 13, dans laquelle une paroi supplémentaire (20) entoure l'écran primaire (18), une cuve de confinement (22) entoure la paroi supplémentaire (20) et une paroi de bâtiment (24) entoure la cuve de confinement (22).

15. Centrale nucléaire selon l'une quelconque des revendications 1 à 14, dans laquelle le réacteur nucléaire (12) est un réacteur à eau sous pression ou un réacteur à eau bouillante.

16. Centrale nucléaire selon l'une quelconque des revendications 1 à 15, dans laquelle le réacteur nucléaire (12) est un petit réacteur modulaire agencé pour produire jusqu'à 500 MWe.
